(19) Europäisches Patentamt
European Patent Office
Office européen des brevets

(11) EP 0 803 790 B1

(12) **FASCICULE DE BREVET EUROPEEN**

(45) Date de publication et mention
de la délivrance du brevet:
**30.06.2004 Bulletin 2004/27**

(51) Int Cl.⁷: **G06F 1/00**, H04L 9/32

(21) Numéro de dépôt: **97400793.2**

(22) Date de dépôt: **07.04.1997**

(54) **Procédé de dissimulation d'un code secret dans un dispositif d'authentification informatique**

Verfahren zur Verdeckung eines Geheimcodes in einer Rechnerbeglaubigungsvorrichtung

Method of concealing a secret code in a computer authentication device

(84) Etats contractants désignés:
**DE GB IT**

(30) Priorité: **09.04.1996 FR 9604404**

(43) Date de publication de la demande:
**29.10.1997 Bulletin 1997/44**

(73) Titulaire: **FRANCE TELECOM**
**75015 Paris (FR)**

(72) Inventeurs:
• **Clemot, Olivier**
**92160 Antony (FR)**
• **Campana, Mireille**
**92140 Clamart (FR)**
• **Arditti, David**
**92140 Clamart (FR)**

(74) Mandataire: **Audier, Philippe André et al**
**Brevalex,**
**3, rue du Docteur Lancereaux**
**75008 Paris (FR)**

(56) Documents cités:
**EP-A- 0 191 324**          **FR-A- 2 690 257**
**US-A- 5 233 655**

• **COMPUTERS & SECURITY INTERNATIONAL
JOURNAL DEVOTED TO THE STUDY OF
TECHNICAL AND FINANCIAL ASPECTS OF
COMPUTER SECURITY, vol. 11, no. 5, 1
Septembre 1992, pages 427-437, XP000296996
BAUSPIESS F ET AL: "REQUIREMENTS FOR
CRYPTOGRAPHIC HASH FUNCTIONS"**
• **PHILIPS TELECOMMUNICATION REVIEW, vol.
47, no. 3, 1 Septembre 1989, pages 1-19,
XP000072642 FERREIRA R C: "THE SMART
CARD: A HIGH SECURITY TOOL IN EDP"**

## Description

Domaine technique

L'invention concerne un procédé pour dissimuler un code secret dans un dispositif d'authentification tel qu'une disquette informatique, une carte à mémoire,..., pouvant être lu à partir d'un lecteur adéquat.

Elle trouve des applications dans tous les systèmes informatiques mettant en oeuvre une procédure d'authentification des utilisateurs voulant se connecter, depuis un terminal, sur le système central.

Etat de la technique

Dans les systèmes informatiques actuels, la protection des données joue un rôle de plus en plus important. En effet, la qualité du système informatique dépend de manière décisive de la sécurité de l'échange de données à l'intérieur du système. On cherche donc de plus en plus à sécuriser l'accès au système, c'est-à-dire que l'on cherche à contrôler si les personnes utilisant le système sont autorisées à l'utiliser, les personnes non autorisées devant alors être refusées par le système.

Un mode de réalisation simple, mais n'offrant pas une sécurité absolue, consiste à contrôler l'accès au système informatique par la vérification du mot de passe connu uniquement de l'utilisateur autorisé et souvent changé afin de limiter la possibilité que des utilisateurs non autorisés découvrent ce mot de passe. Cependant, il y a de forts risques pour que les mots de passe soient interceptés par des personnes non autorisées désireuses d'utiliser le système informatique.

De plus, ce mot de passe est stocké dans la zone mémoire du système informatique (zone protégée ou non) afin d'être comparé au mot de passe entré par l'utilisateur. Il peut donc être facilement retrouvé en mémoire par un utilisateur frauduleux.

Pour éviter cette fraude, une technique consiste à crypter le mot de passe avant de le stocker en mémoire. Ce cryptage se fait au moyen d'une fonction de cryptage qui est choisie, en général, de façon à ce qu'il soit impossible de retrouver le mot de passe à partir de l'image du mot de passe obtenue après cryptage de ce mot de passe. Cette technique est utilisée, par exemple, dans les systèmes UNIX®.

Dans ce cas, l'image du mot de passe est stockée en clair dans la mémoire de sorte qu'il est possible à un utilisateur frauduleux de récupérer le fichier de toutes les images de mots de passe mémorisées et ensuite d'implémenter la fonction de cryptage sur un autre système informatique et d'essayer des listes de mots de passe jusqu'à retrouver ceux qui correspondent aux images du fichier. Une telle analyse du code du système (fonction, fichier des images de mot de passe...) est appelée "attaque par dictionnaire".

Par ailleurs, il existe un procédé permettant de dissimuler un code secret en stockant, sur des moyens de stockage tels qu'une disquette, une carte à mémoire, etc., l'image du code secret par une fonction de cryptage réversible, paramétrée par le mot de passe de l'utilisateur. Ce procédé est mis en oeuvre "localement", c'est-à-dire qu'il est exécuté par le terminal, en liaison avec les moyens de stockage et qu'il ne nécessite aucune connexion vers le système central.

Ce procédé est décrit en détail dans la demande de brevet FR-A-2 690 257.

Comme expliqué dans cette demande de brevet, ce procédé permet aussi de changer le mot de passe de l'utilisateur localement, c'est-à-dire sans qu'aucune connexion au système central ne soit nécessaire. Par contre, une connexion au système est obligatoire pour vérifier la validité de ce changement de mot de passe.

L'authentification de l'utilisateur se fait donc localement : le code secret n'est jamais transmis, sur une ligne de transmission, vers le système central. L'unique transmission du code secret au cours du procédé, se fait entre le lecteur des moyens de stockage et le terminal, ce qui limite les risques d'interception par un fraudeur. La connexion sur le système central se fait ensuite, c'est-à-dire après vérification locale du code secret.

Cependant, un tel procédé nécessite une protection physique des moyens de stockage (disquette) pour éviter la fraude directement sur ces moyens de stockage. Ceci implique donc l'utilisation de matériels et de technologies spécifiques, entraînant un coût relativement important.

Un article intitulé « Requirements for cryptographic hash functions » de Fritz Bauspiess et Frank Dann (Computers & Security International Journal Devoted to the Study of Technical and Financial Aspects of Computer Security, vol 11, no. 5, 1 Septembre 1992, Pages 427-437, XP000296996) définit les caractéristiques de qualité que doivent remplir de bonnes fonctions de hachage cryptographique. Cet article envisage l'utilisation de telles fonctions pour la compression de plusieurs messages vers un résumé identique.

Un brevet US 5 233 655 décrit un système de vérification d'accès de données permettant l'utilisation d'un numéro d'identification personnel pour prouver l'autorité d'accès à une base de données. Ce brevet envisage l'utilisation d'un numéro d'identification personnel traduit TPIN en utilisant un algorithme dans un circuit de calcul, plusieurs numéros d'identification personnels PIN correspondent à ce numéro TPIN.

Exposé de l'invention

L'invention a pour but de remédier aux inconvénients des procédés décrits précédemment. A cette fin, elle propose un procédé pour dissimuler un code secret dans un dispositif d'authentification tel qu'une disquette ou une carte à mémoire. Ce procédé permet de vérifier localement le code secret entré par l'utilisateur, tout en limitant les risques d'attaques par dictionnaire.

De façon plus précise, l'invention concerne un procédé de vérification par un utilisateur, voulant accéder à un système central à partir d'un terminal, d'un code secret dont l'image, obtenue à l'aide d'une fonction de cryptage, est dissimulée dans un dispositif d'authentification informatique par lequel la fonction de cryptage est telle que, à chaque image de code secret mémorisée correspond une pluralité de codes antécédents tous différents du code secret, mais qui, une fois cryptés par la fonction de cryptage ont une image identique à celle du code secret, et caractérisé en ce que, pour éviter toute attaque par dictionnaire de la part d'un utilisateur frauduleux ledit procédé comprend les étapes suivantes :

- une étape de vérification locale du code secret entré par l'utilisateur et crypté par la fonction de cryptage, par comparaison dans le terminal avec l'image du code secret mémorisée dans le dispositif. d'authentification et sans connexion vers un système central,
- puis si cela est vérifié, une étape d'authentification dudit code secret, entré par l'utilisateur mais pas crypté, par le système central.

Avantageusement, le code secret ayant n caractères, la fonction de cryptage consiste à associer à ces n caractères une image de code secret de k caractères, avec k < n.

Selon un mode de réalisation préféré de l'invention, le nombre k des caractères de l'image du code secret est égal à $\frac{n}{2}$.

Brève description es figures

- La figure 1 représente schématiquement la répartition des images du code secret dans la mémoire ainsi que des antécédents possible de cette image ;
- les figures 2A, 2B, 3A et 3B représentent des exemples de fonctions de cryptage appliquées à un certain nombre de caractères numériques ; et
- la figure 4 représente le schéma fonctionnel du procédé de vérification du code secret.

Description détaillée de modes de réalisation de l'invention

L'invention concerne un procédé pour dissimuler un code secret dans un dispositif d'authentification tel qu'une disquette informatique ou une carte mémoire ou encore une calculette.

Ce procédé consiste à crypter le code secret par une fonction de cryptage g, de façon à former une image du code secret qui est ensuite mémorisée dans le dispositif d'authentification.

La fonction de cryptage g est choisie de façon à ce que l'image du code secret soit suffisamment précise pour qu'une faute de frappe, tapée par l'utilisateur lorsque celui-ci entre son code secret, puisse être détectée avec une probabilité tout à fait satisfaisante mais que, pourtant, chaque image du code secret possède de nombreux antécédents par la fonction de cryptage, de façon à ce qu'une attaque par dictionnaire fournisse de nombreuses fausses solutions à la vérification locale, mais pas à l'authentification distante.

En d'autres termes, la fonction de cryptage g est choisie de façon à ce que le code secret ait une image de code secret qui corresponde à une multitude de codes antécédents (appelés simplement "antécédents", dans la suite du texte). Ces codes antécédents sont une sorte de faux codes secrets, qui, codés par la fonction de cryptage g, donnent tous la même image de code secret que le véritable code secret de l'utilisateur, mais qui seront refusés lors de la procédure d'authentification.

Ainsi, un utilisateur frauduleux qui serait en possession du dispositif d'authentification, par exemple de la disquette, et qui aurait ainsi découvert le fichier des images de codes secrets et qui, par ailleurs, serait en possession de la fonction de cryptage g, ne pourrait pas déterminer précisément quel est le code secret de l'utilisateur. En effet, une attaque par dictionnaire lui fournirait de nombreuses solutions à la vérification locale, mais une très faible chance de trouver la véritable solution, c'est-à-dire le véritable code secret. Effectivement, si l'utilisateur frauduleux essaie l'un des codes antécédents fourni par l'attaque par dictionnaire, celui-ci est vérifié localement ; par contre, il sera refusé lors de l'authentification à distance, c'est-à-dire de l'authentification par le système central.

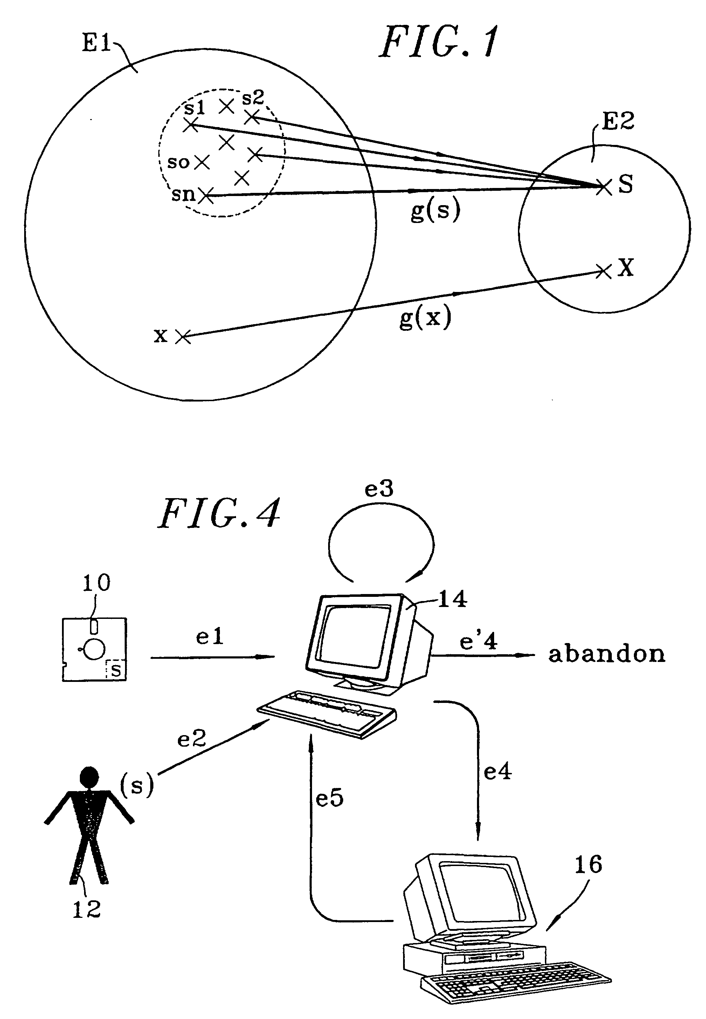

On a représenté sur la figure 1, de façon très schématique, la répartition des images de codes secrets dans la mémoire, ainsi que la répartition des codes antécédents de ces images de codes secrets.

De façon plus précise, on a appelé "E1" l'ensemble de tous les codes qui pourraient être un code secret choisi par l'utilisateur et "E2" l'ensemble de toutes les images de ces codes secrets qui pourraient être choisis par l'utilisateur. L'ensemble E1 comporte donc tous les éventuels codes secrets, dont, en particulier, un code x et une multitude de codes s1 à sn.

Si "g" est la fonction de cryptage choisie, alors l'image du code x par la fonction de cryptage g donne l'image X qui se situe dans l'ensemble E2 des images de codes secrets possibles. D'autre part, l'image par la fonction de cryptage g de chacun des codes s1 à sn donne l'image de code secret S contenue dans l'ensemble E2.

Ce sont donc tous ces codes antécédents s1, s2, s3,..., sn qui, codés par la fonction de cryptage g, donnent une image S qui correspond aussi à l'image du véritable code secret. On comprend donc que l'un de ces codes s1 à sn est le véritable code secret choisi par l'utilisateur. Ainsi, bien que tous ces codes antécédents s1 à sn aient pour image S, l'un seulement de ces codes antécédents est le véritable code secret qui vérifiera l'authentification par le système central.

Ainsi, un utilisateur frauduleux qui serait en possession à la fois de la fonction de cryptage g et de l'image de code secret S, ne saura lequel des codes antécédents s1 à sn choisir. Aussi, s'il essaie localement, c'est-à-dire au niveau du terminal informatique, l'un de ces codes antécédents s1 à sn, la vérification par le terminal lui donnera une réponse positive, c'est-à-dire qu'une procédure d'authentification peut être mise en oeuvre. Cependant, cette procédure d'authentification n'aboutira pas et la connexion au système central sera refusée.

Par contre, la fonction de cryptage est choisie de façon à ce qu'elle fournisse des images de codes secrets suffisamment précises pour qu'une faute de frappe de la part de l'utilisateur puisse être détectée localement, c'est-à-dire sans nécessiter de connexion avec le système central.

Selon un mode de réalisation de l'invention, la fonction de cryptage g est une fonction qui associe à n caractères constituant le code secret, une image de code secret de taille réduite, c'est-à-dire de k caractères, avec k < n. Par exemple, pour un code secret ayant n caractères, la fonction de cryptage g associe une image de k = n/2 caractères. Dans le mode de réalisation préféré de l'invention, la fonction g associe à un code secret de huit caractères (ce qui correspond à une taille d'environ $2^{40}$ bits), une image de code secret de quatre caractères (taille d'environ $2^{20}$ bits).

Pour une fonction de cryptage g de ce type, l'utilisateur qui tape le véritable code secret avec une faute de frappe aura un risque sur environ un million de cas (1 sur $2^{20}$) que sa faute de frappe ne soit pas détectée lors de l'opération de vérification locale ; par contre, un utilisateur frauduleux qui tente une attaque par dictionnaire se verra confronté à environ un million de solutions ($2^{20}$), parmi lesquelles une seule est la bonne, c'est-à-dire qu'une seule correspond au véritable code secret.

On comprendra, bien sûr, que plusieurs fonctions peuvent être utilisées, pour vérifier les conditions énoncées précédemment. Même des fonctions très simples peuvent être utilisées. Par exemple, si l'on prend en compte les chiffres entre 0 et 9 et les lettres de l'alphabet que l'on représente par des valeurs comprises entre 10 et 35, on peut choisir une fonction g1 qui associe, à chaque couple de caractères (lettres ou chiffres) du code secret de l'utilisateur, une valeur déterminée entre 0 et 35, de telle sorte que pour un caractère donné du bigramme (c'est-à-dire du couple de caractères), l'image soit différente lorsque le deuxième caractère varie. On peut, par exemple, choisir la somme des deux valeurs du bigramme.

La figure 2A représente schématiquement le traitement effectué par la fonction g1 sur un code secret comprenant n caractères.

On a donc représenté sur cette figure 2A, les n/2 couples de caractères (c1, c2) (c3, c4)... (c1, cn) et chacune des images $Ic_1$,..., $Ic_{n/2}$ de ces bigrammes. D'après la définition de la fonction g1, décrite précédemment, chaque image $Ic_{n/2}$ correspond à la somme des caractères $C_1$ et $C_n$ du bigramme correspondant, sachant que si la somme de ces caractères donne une valeur supérieure ou égale à 10, on choisit pour $Ic_{n/2}$ la valeur de plus faible poids, à savoir le chiffre de l'unité.

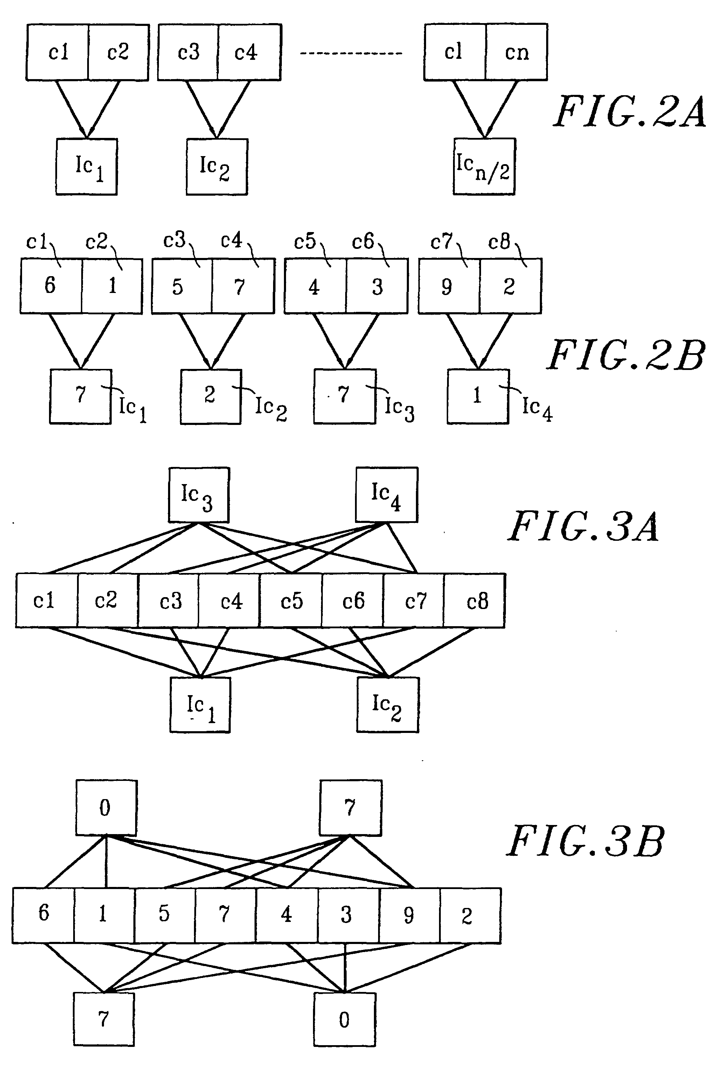

La figure 2B représente un exemple numérique du cryptage réalisé au moyen de la fonction g1. Dans cet exemple, on considère un code secret de huit caractères numériques notés c1, c2,..., c8 regroupés en quatre bigrammes dont les valeurs sont comprises entre 0 et 9 sont :

(c1, c2) = (6,1)
(c3, c4) = (5,7)
(c5, c6) = (4,3)
(c7, c8) = (9,2)

La fonction g1 associe donc à chaque bigramme, la somme des deux caractères le constituant. Ainsi :

$\Sigma$(c1, c2) = 7
$\Sigma$(c3, c4) = 2
$\Sigma$(c5, c6) = 7
$\Sigma$(c7, c8) = 1

On comprend donc, à partir de cet exemple, que l'image du code secret "61574392" est "7271". Une telle image 7271 peut avoir une multitude d'antécédents, puisque chaque caractère de cette image du code secret peut être le résultat de la somme (ou bien l'unité d'un chiffre correspondant à la somme) d'une multitude de nombres compris entre 0 et 35.

On comprend bien, de plus, que si l'utilisateur tapait le véritable code secret avec une erreur de frappe, par exemple 7 à la place de 6 pour le caractère c1, cette erreur serait tout de suite détectée localement puisque la somme de 7 et de 1 ne peut, bien évidemment, donner le chiffre 7 qui correspond à l'image Ic1 du premier couple de caractères (c1, c2).

Sur la figure 3A, on a représenté un exemple d'une autre fonction de cryptage : la fonction $g_2$ qui consiste à associer à l'ensemble des huit caractères c1 à C8 composant le code secret, quatre combinaisons linéaires indépendantes, modulo 36, de ces huit caractères, chaque combinaison linéaire pouvant être différente.

Par exemple, le premier caractère Ic1 de l'image du code secret associe les caractères c1, c3, c4 et c7 du code secret ; le second caractère Ic2 de cette image du code secret associe les caractères c2, c5, c6 et c8 ; le troisième caractère de l'image du code secret Ic3 associe les caractères c1, c2, c5 et c7, et le quatrième caractère Ic4 de l'image du code secret associe les caractères c3, c4, c5 et c7 du code secret initial.

Sur la figure 3B, on a représenté le même exemple que celui de la figure 3A, mais dans lequel on a attribué à chaque caractère une valeur numérique qui est la même que celle donnée dans l'exemple de la figure 2B. Ainsi :

c1 = 6
c2 = 1
c3 = 5
c4 = 7
c5 = 4
c6 = 3
c7 = 9
c8 = 2

Après cryptage, par la fonction g2, d'un code secret de huit caractères c1 à c8, où c1,..., c8 ont les valeurs ci-dessus, on obtiendra une image de code secret 7007, avec $Ic1 = 7$, $Ic2 = 0$, $Ic3 = 0$, $Ic4 = 7$.

Ainsi, le procédé de dissimulation du code secret sur le dispositif d'authentification présente donc l'avantage, non seulement de détecter une éventuelle faute de frappe de la part de l'utilisateur lorsque celui-ci entre son code secret sur le terminal, mais surtout d'éviter une attaque par dictionnaire de la part d'un utilisateur frauduleux, puisque l'image du code secret mémorisée sur la disquette à un tel nombre de codes antécédents possibles qu'un utilisateur frauduleux a très peu de chance de trouver le véritable code secret.

Le procédé décrit ci-dessus pour dissimuler un code secret dans une disquette informatique, une carte à mémoire, ou tout autre dispositif d'authentification, peut être utilisé dans un procédé de vérification du code secret entré par un utilisateur désirant accéder à un système central, à partir d'un terminal connecté à un lecteur apte à lire son dispositif d'authentification.

Pour une meilleure compréhension de l'invention, le procédé de vérification du code secret va être décrit dans le cas où le dispositif d'authentification est une disquette informatique.

Ce procédé de vérification consiste, après que la disquette ait été introduite dans le lecteur de disquettes associé au terminal, à ce que l'utilisateur entre son code secret sur le terminal à partir duquel il désire se connecter au système central. Le terminal vérifie alors si l'image, par la fonction de cryptage g, du code secret s que vient de taper l'utilisateur correspond à l'image S mémorisée sur la disquette. Si cela n'est pas le cas, alors le terminal refuse toute connexion vers le système central. Au contraire, si cela est vérifié, alors une étape de détermination de la clé secrète non chiffrée K est commencée, au terme de laquelle le terminal se connectera au système central. Cette clé secrète non chiffrée K est déterminée à partir de l'inverse $f^{-1}$ de la fonction de chiffrage f de la clé par le mot de passe (f étant une fonction réversible), et à partir de la clé chiffrée stockée sur la disquette, tel que cela est expliqué dans la demande de brevet FR-A-2 690 257, déjà citée précédemment.

La procédure d'authentification qui est mise en oeuvre dès que le terminal informatique se connecte sur le système central, ne sera donc pas décrite ici puisqu'elle est identique à celle décrite dans le document FR-A-2 690 257.

Un diagramme fonctionnel de ce procédé de vérification du code secret est représenté sur la figure 4.

La disquette informatique, référencée 10, est introduite dans le terminal informatique 14 lors d'une étape e1. L'utilisateur, référencé 12, entre ensuite son code secret (s) sur le terminal 14 lors d'une étape e2. Une étape e3 est alors effectuée qui consiste à crypter par la fonction g, le code secret s que l'utilisateur vient d'entrer puis à vérifier si l'image du code secret par la fonction g correspond bien à l'image de code secret s mémorisée sur la disquette 10. Si ce n'est pas le cas, alors le procédé de vérification est abandonné (étape e'4) et donc aucune procédure d'authentification par le système central n'est envisagée. Au contraire, si cette vérification s'avère exacte, une étape e4 est effectuée. Cette étape e4 consiste à déterminer la clé secrète non chiffrée K et à l'envoyer au système central 16 qui commence alors la procédure d'authentification (étape e5), au moyen d'un échange d'informations avec le terminal 14.

Ainsi, le procédé de vérification du code secret assure une limitation du nombre de connexions au système central, puisque seuls les codes secrets acceptés lors de la vérification locale du code secret font l'objet d'une procédure d'authentification.

De plus, l'image du code secret étant mémorisée sur le dispositif d'authentification, et non dans une mémoire accessible à tous un utilisateur frauduleux désirant connaître cette image de code secret doit tout d'abord s'emparer de ce dispositif d'authentification, ce qui participe à la limitation des fraudes.

**Revendications**

1. Procédé de vérification par un utilisateur (12), voulant accéder à un système central à partir d'un terminal (14), d'un code secret dont l'image, obtenue à l'aide d'une fonction de cryptage (g), est dissimulée dans un dispositif d'authentification informatique (10) par lequel la fonction de cryptage est telle que à chaque image de code secret mémorisée correspond une pluralité de codes antécédents (s1...., sn) tous différents du code secret, mais qui, une fois cryptés par la fonction de cryptage (g), ont une image (s) identique à celle du code secret, et **caractérisé en ce que**, pour éviter toute attaque par dictionnaire de la part d'un utilisateur frauduleux ledit procédé comprend les étapes suivantes :

   - une étape (e3) de vérification locale du code secret entré par l'utilisateur (12) et crypté par la fonction de cryptage, par comparaison, dans le terminal avec l'image du code secret mémorisée dans le dispositif d'authentification (10) et sans connexion vers un système central,

- puis si cela est vérifié, une étape (e5) d'authentification dudit code secret, entré par l'utilisateur mais pas crypté, par le système central (16).

2. Procédé de vérification d'un code secret selon la revendication 1, dans lequel, le code secret ayant n caractères (c1,..., cn), la fonction de cryptage (g) consiste à associer à ces n caractères (c1,..., cn) une image de code secret de k caractères, avec k < n.

3. Procédé de vérification d'un code secret selon la revendication 2, dans lequel le nombre k des caractères de l'image du code secret est égal à $\frac{n}{2}$.

**Patentansprüche**

1. Verfahren zur Überprüfung eines Geheimcodes durch einen Nutzer (12), der von einem Endgerät (14) aus auf ein zentrales System zugreifen will, wobei das mittels einer Verschlüsselungsfunktion (g) erhaltene Abbild des Geheimcodes in einer Informatik-Authentifizierungsvorrichtung (10) versteckt ist, wobei die Verschlüsselungsfunktion derart ist, dass jedem gespeicherten Geheimcode-Abbild mehrere vorangehende Codes (s1,...,sn) entsprechen, die sich alle von dem Geheimcode unterscheiden, die aber, sobald sie von der Verschlüsselungsfunktion (g) verschlüsselt sind, ein dem Geheimcode identisches Abbild (s) aufweisen, und

**dadurch gekennzeichnet, dass** zur Vermeidung jeglicher Dateilisten-Attacke (attaque par dictionnaire) seitens eines betrügerischen Nutzers das Verfahren die folgenden Schritte umfasst:

- einen Schritt (e3) zur lokalen Überprüfung des vom Nutzer (12) eingegebenen und durch die Verschlüsselungsfunktion verschlüsselten Geheimcodes durch Vergleichen mit dem Abbild des in der Authentifizierungs-Vorrichtung (10) gespeicherten Geheimcodes am Endgerät und ohne Verbindung zu einem zentralen System,
- anschließend, wenn dies überprüft ist, einen Schritt (e5) der Authentifizierung des vom Nutzer eingegebenen, aber nicht verschlüsselten Geheimcodes durch das zentrale System (16).

2. Verfahren zur Überprüfung eines Geheimcodes nach Anspruch 1, wobei die Verschlüsselungsfunktion (g), wenn der Geheimcode n Zeichen (c1,..., cn) hat, darin besteht, diesen n Zeichen (c1,..., cn) ein Geheimcode-Abbild von k Zeichen zuzuordnen, wobei k < n ist.

3. Verfahren zur Überprüfung eines Geheimcodes nach Anspruch 2, wobei die Anzahl k der Zeichen des Geheimcode-Abbilds gleich $\frac{n}{2}$ ist.

**Claims**

1. Process for the verification by a user (12), wishing to access a central system from a terminal (14), of a secret code, whose image, obtained with the aid of an encrypting function (g), is dissimulated in an information technology authentication device (10), by which the encrypting function (g) is such, that with each stored secret code image corresponds a plurality of antecedent codes (s1 ... sn), all different from the secret code, but which, once encrypted by the encrypting function, have an image (s) identical to that of the secret code and **characterized in that**, in order to avoid any attack by dictionary on the part of a fraudulent user, the said process comprises the following stages:

- a local verification stage (e3) for the secret code entered by the user (12) and encrypted by the encrypting function by comparison in the terminal with the image of the secret code stored in the authentication device (10) and without connection to a central system,
- then if this is verified, an authentication stage (e5) of said secret code, entered by the user, but not encrypted by the central system (16).

2. Process for the verification of a secret code according to claim 1, **characterized in that** with the secret code having n characters (c1, ..., cn), the encrypting function (g) consists of associating with said n characters (c1, ..., cn) a secret code image of k characters with k < n.

3. Process for the dissimulation of a secret code according to claim 2, **characterized in that** the number k of characters of the secret code image is $\frac{n}{2}$.

# FIG.1

# FIG.4

FIG.2A

FIG.2B

FIG.3A

FIG.3B